# EUROPÄISCHE PATENTSCHRIFT

(11) **EP 1 140 317 B1**
(45) Veröffentlichungstag und Bekanntmachung des Hinweises auf die Patenterteilung: **23.04.2003**
(21) Anmeldenummer: 99972121.0
(22) Anmeldetag: 11.11.1999
(51) Int. Cl.: B01D 25/164, B01D 25/28

(54) **FILTERVORRICHTUNG, FILTRATIONS- UND REINIGUNGSVERFAHREN**
FILTER DEVICE, AND FILTRATION AND CLEANING METHOD
SYSTEME DE FILTRATION, PROCEDE DE FILTRATION ET DE NETTOYAGE

(30) Priorität: 12.11.1998 DE 19852084
(43) Veröffentlichungstag der Anmeldung: 10.10.2001
(73) Patentinhaber: H. Strassburger GmbH. & Co. KG, 67593 Westhofen (DE)
(72) Erfinder: SEBASTIAN, Horst, Jürgen, D-67593 Westhofen (DE)
(74) Vertreter: Fuchs Mehler Weiss & Fritzsche
(86) Internationale Anmeldenummer: EP9908708
(87) Internationale Veröffentlichungsnummer: WO00029089

(56) Entgegenhaltungen:
- EP-A- 0 142 173
- EP-A- 0 207 555
- EP-A- 0 232 735
- EP-A- 0 318 872
- EP-A- 0 419 931
- DE-A- 2 251 265
- DE-A- 3 906 816
- GB-A- 1 022 928
- GB-A- 2 200 301

## Beschreibung

Die Erfindung betrifft eine Vorrichtung zum kontinuierlichen Filtrieren von Flüssigkeiten mittels Druckgefälle zwischen Einlauf und Auslauf sowie zum Auspressen restlicher Unfiltratmengen mittels eines pneumatischen Druckmediums vor dem Öffnen der Vorrichtung mit
- einer Mehrzahl von Filterplatten, die beidseitig eine Vertiefung zur Aufnahme eines flächigen Filtermediums aufweisen und die mit Ablaufkanälen für das Filtrat ausgestattet sind,
- einer Mehrzahl von Membranplatten, die Anschlüsse, Bohrungen und Ausnehmungen für die Zufuhr des Druckmediums aufweisen und beidseitig mit einer elastischen Membran belegt sind, wobei zwischen Filtermedium und Membran ein Unfiltrat- bzw. Filterkuchenraum ausgebildet ist,
- korrespondierenden Ausnehmungen in den Filter- und Membranplatten, die in montiertem Zustand wenigstens je einen Zulaufkanal für das Unfiltrat und einen Ablaufkanal für das Filtrat bilden,
   sowie mit
- Endplatten, Halterungs- und Spanneinrichtungen, um die Filterplatten, Membranplatten und Rahmen zu einem Paket lösbar miteinander zu verbinden.

Die Erfindung betrifft auch ein Filtrations- und ein Reinigungsverfahren. Eine derartige Vorrichtung gehört hinsichtlich ihres konstruktiven Aufbaus zu den sogenannten Filterpressen. Sie wind jedoch beim Filtrieren wie ein Plattenfilter benutzt, bei dem das Filtrat durch das Flüssigkeits-Druckgefälle zwischen Einlauf und Auslauf durch das Filtermedium hindurchgedrückt wird.

Ein Beispiel für einen Plattenfilter ist aus der DE 39 06 816 C3 bekannt geworden. Dabei ist eine Mehrzahl von parallel zueinander angeordneten Filterplatten zu einem Filterpaket zusammengefaßt, wobei in montiertem Zustand Filterschicken zwischen Paßflächen der Filterplatten zusammengepreßt sind, die sowohl eine Abdichtung zwischen den Unfiltrat-und den Filtraträumen als auch eine Abdichtung des gesamten Filterpaketes nach außen gewährleisten.

Ein Beispiel für eine Filterpresse ist aus der DE 39 32 422 A1 bekannt geworden. Die im Wechsel mit üblichen Filterplatten angeordneten Membranplatten bestehen aus einem kreisringförmigen Rahmenteil mit Anschlüssen für die Zu- und Abfuhr eines Druckmediums und einer Mittelwand, wobei an dem zur Mittelwand symmetrischen Rahmenteil beidseitig je eine Membran mittels eines Klemmrings befestigt ist. Die axiale Erstreckung der Filterpresse ergibt sich aus den addierten Breiten der Filterplatten und der Rahmenteile der Membranplatten. Der zwischen der Mittelwand der Membranplatte und den beidseitig auf die Filterplatten aufgebrachten Filtermedien vorhandene Raum wird durch die Membranen hinsichtlich ihres Volumens in etwa gleichgroße Suspensions- und Druckmediumkammern unterteilt. Die Rahmenteile weisen in axialer Richtung der Filtervorrichtung erstreckende wulstförmige Erhebungen auf, um die herum die Membranen geführt sind, um ihre Haltbarkeit bei einer wechselnden Beanspruchung mit bis zu 120 bar in diesen besonders kritischen Bereichen zu verbessern. Diese Art der Membranführung und -anordnung bringt es mit sich, daß die Membran beim Preßvorgang unter Druckmittelbeaufschlagung nicht gedehnt, sondern gestaucht wird. Daraus folgt, daß die Membran weder in entspanntem Zustand vollflächig an der Membranplatte anliegt, noch im druckmittelbeaufschlagten Zustand vollflächig und glatt an der Filterplatte anliegen kann. Dadurch verbleiben unweigerlich Restmengen im Unfiltratraum zurück. Im Hinblick auf den Einsatzzweck der gattungsmäßigen Vorrichtung weist die bekannte Filterpresse wegen der Bereitstellung der Druckmediumkammern zwischen Membranen und Mittelwand der Membranplatte eine unnötig große axiale Erstreckung auf. Anders ausgedrückt, es wird der zwischen Filterplatte und Membranplatte als Unfiltratraum nutzbare Raum infolge der Mittellage der Membranen quasi halbiert, was unter sonst gleichen Bedingungen ebenfalls zu einer räumlichen Überdimensionierung der Filterpresse führt.

Außerdem sind Filtervorrichtungen bekannt geworden, bei denen druckmittelbeaufschlagte Membranen mit Filtertüchern zusammenarbeiten, die beim Filtrieren die Formänderung der Membranen ganz oder teilweise mitmachen müssen. In diesen Fällen sind die Membranen auf der dem Filtertuch zugewandten Seite mit Distanznocken versehen, damit das durch das Filtertuch hindurchtretende Filtrat zwischen Filtertuch und Membran ablaufen kann. Derartige Membranen sind für den Anwendungszweck der erfindungsgemäßen Vorrichtung nicht geeignet.

Es besteht somit die Aufgabe, eine Vorrichtung zum Filtrieren von Flüssigkeiten der eingangs genannten Art dahingehend weiterzubilden, daß die Restverluste im Vergleich zu üblichen Plattenfiltern deutlich reduziert werden können, ohne daß die Nachteile bekannter Filterpressen in Kauf genommen werden müssen.

Zur Lösung dieser Aufgabe wird erfindungsgemäß vorgeschlagen, daß das Filtermedium aus in die Ausnehmungen der Filterplatten eingelegten Abschnitten eines Schichtfiltermaterials besteht und daß die unter Druckbeaufschlagung bis zur flächigen Anlage an den Filterplatten bzw. Schichtfiltermaterial elastisch dehnbaren Membranen beidseitig eine glatte Oberfläche aufweisen und in entspanntem Zustand vollflächig an den Membranplatten anliegt.

Als Filtermedium können Abschnitte eines bewährten und preisgünstigen Schichtfiltermaterials verwendet werden, weil der normale Filtervorgang wie bei herkömmlichen Plattenfiltern abläuft. Bei Schichtenfiltermaterial handelt es sich um ein labyrinthartig strukturiertes Tiefenfiltergefüge, das gegebenenfalls in Verbindung mit unterschiedlichen Oberflächenladungen eine sowohl mechanisch als auch adsorptiv beeinflußte Abscheidung von Partikeln auf dem relativ langen Weg durch das Filtermedium ermöglicht. Diese auch als Filterschichten bezeichneten Schichtenfiltermaterialien sind Spezialpappen zur Filtration fluider Medien mit dem Ziel, grobe bis feinste Partikel, Kolloide, Mikroorganismen und andere unerwünschte Bestandteile abzutrennen, um ein Filtrat in gewünschter Qualität zu erhalten bzw. feste Rückstände zu gewinnen. Ihre Herstellung erfolgt auf speziellen Pappenmaschinen, vorwiegend Langsiebmaschinen.

Die Ausgangsmaterialien sind meist selektierte, gebleichte Zellstoffe aus Nadel- und Laubhölzern von hoher Reinheit, d.h. mit hohem Alpha-Gehalt, ausgewählte Kieselguren und Perlite sowie für Spezialfälle Kunststofffasern, wie z.B. Polyolefinfasern, Aktivkohle, Polyvinylpolypyrrolidon (PVPP) oder ähnliches.

Die meisten Filterschichten können auf der Abströmseite mit einer Flächenverfestigung zur Unterbindung einer Faserabgabe während der Filtration ausgerüstet werden, ohne dabei das Durchströmverhalten zu beeinträchtigen. Zur Erzielung spezieller Wirksamkeiten (Grenzflächenpotentiale, Zetapotential) können bestimmte gesetzlich zugelassene Harze in geringen Anteilen verarbeitet werden.

Die Auswahl der Rohstoffe, ihre Aufbereitung sowie die Mischungsverhältnisse in Verbindung mit anderen Fertigungsparametern bestimmen Wirksamkeit und Anwendungsbereich.

Nur beim Auspressen der in den Unfiltraträumen verbleibenden Restmengen vor dem Öffnen der Filtervorrichtung werden die im Wechsel eingebauten Membranplatten aktiviert und das restliche Filtrat mittels der druckbeaufschlagten Membranen durch den vorhandenen Filterkuchen und das Filtermedium ausgepreßt.

Dadurch, daß die Unfiltraträume vollständig von der Membrane bei Druckbeaufschlagung ausgekleidet werden, ist es möglich, die Restmengenverluste bis gegen Null zu reduzieren, weil die Unfiltraträume mittels der Membrane praktisch vollkommen entleert werden können und außerdem die Filterkuchen einem zusätzlichen mechanischen Auspreßvorgang unterworfen werden. Der Filterkuchen wird verfestigt und von restlichen Filtratmengen nahezu vollständig befreit. Man erhält einen weitgehend trockenen Filterkuchen, der nach dem Öffnen der Filtervorrichtung ohne Schwierigkeiten zusammen mit dem Filtermedium entnommen werden kann. Der Filterkuchen ist dadurch so aufbereitet, daß er weiterverarbeitet werden kann, wie dies bei manchen Filtrationsaufgaben, z.B. der Gewinnung von Blutplasma, erforderlich ist.

Die beidseitig glatte Ausführung der Membran verhindert einmal, daß Filterkuchenbestandteile an den Membranen kleben bleiben und daß andererseits die Ablaufkanäle in den Filterplatten optimal abgedeckt werden können, wenn sie zu Reinigungszwecken mit einem schnellfließenden Spülmittel beaufschlagt werden sollen.

Vorzugsweise bestehen die Ablaufkanäle auf der Filterplatte aus vertikal und horizontal verlaufenden Nuten, die im Bereich der Vertiefung für die Abschnitte des Schichtenfiltermaterials in den Filterplatten ausgebildet sind.

Vorzugsweise stehen die Horizontal- und/oder Vertikalnuten mit mindestens einem im Innern der Filterplatte angeordneten Filtratsammelkanal in Verbindung.

Zur Festlegung der Größe des Unfiltratraumes und um gegebenenfalls dessen Größe zu verändern, ist zwischen der Membranplatte und der Filterschicht jeweils mindestens ein Rahmen angeordnet. Es ist dadurch möglich, die Größe des Unfiltratraums der Filtrationsaufgabe anzupassen, insbesondere dann, wenn die Dicke des Filterkuchens nicht bei allen Filtrationsvorgängen gleich groß ist.

Die Rahmen können eckig, vorzugsweise quadratisch sein und umschließen horizontal sowie vertikal einen im Querschnitt trapezförmigen Unfiltrat- bzw. Filterkuchenraum, bei dem die von der Membranplatte gebildete Grenzfläche größer ist als die von der gegenüberliegenden Filterplatte gebildete Grenzfläche.

Vorteilhafterweise besitzt der Rahmen schräge Innenflächen, um die Ausdehnung und das Anlegen der Membrane im aufgeblasenen Zustand zu erleichtern. Die Abschrägung ist vorzugsweise so gewählt, daß die Rahmenstärke von der Membranseite zur Seite des Schichtfiltermaterials kontinuierlich zunimmt. Toträume werden dadurch vermieden, weil der Unfiltratraum vollständig von der aufgeblasenen Membrane ausgekleidet werden kann.

Vorzugsweise weist die Membranplatte einen Stützkörper auf, auf dem die Membrane angeordnet ist. Im Stützkörper ist vorteilhafterweise ein Druckluftkanal angeordnet, der über Auslassöffnungen mit den beiden den Membranen benachbarten Oberflächen des Stützkörpers in Verbindung steht. Der Druckluftkanal ist vorteilhafterweise verzweigt. Vorzugsweise liegen die Ausnehmungen für die Zu- und Auflaufkanäle in den Filterplatten im Bereich der Vertiefungen für die Abschnitte aus Schichtfiltermaterial.

Die Abschnitte aus Schichtfiltermaterial sind randseitig zwischen den Filterplatten und den Rahmen vorzugsweise abdichtend zusammendrückbar. Die Abschnitte aus Schichtfiltermaterial werden sowohl zur Abdichtung zwischen den Unfiltrat und Filtrat führenden Räumen als auch zur Abdichtung der Vorrichtung nach außen benutzt. Dies hat den Vorteil, daß zusätzliche Dichtelemente eingespart werden können.

Hierzu trägt auch die Maßnahme bei, daß die Membranen sich über die gesamte Fläche der Membranplatten erstrecken und im montierten Zustand zwischen den Membranplatten und den Rahmen randseitig abdichtend eingeklemmt sind.

Vorzugsweise stehen die Membranplatten mindestens im Bereich der Anschlüsse für das pneumatische Druckmedium über die einheitliche Kontur der Filterplatten vor. Diese Ausgestaltung besitzt den Vorteil, daß die Befestigung der Membranen von außen zugänglich ist.

Die Druckluftanschlüsse der Membranplatten sind an der Stirnseite der Membranplatten vorzugsweise außerhalb der vertikalen Mittellängsebene der Vorrichtung angeordnet. Dadurch wird die seitliche Zugänglichkeit der Druckluftanschlüsse bei der Installation für das Bedienungspersonal erheblich erleichtert.

Die Filterplatten können beidseitig eine außen umlaufende, vom Rand beabstandete Nut für die Aufnahme einer Dichtung aufweisen, die wegen der bereits vorhandenen Abdichtung als zusätzliche Maßnahme vorgesehen sein kann.

Die Filterplatten, die Membranplatten und/oder die Rahmen bestehen vorzugsweise aus Kunststoff. Vorzugsweise werden Polypopylen oder Polypopylencopolymere eingesetzt, so daß die sogenannte FDA-Listung erreicht werden kann und die Vorrichtung für die Filtration empfindlicher Flüssigkeiten eingesetzt werden kann. Die Filtrationsvorrichtung eignet sich daher insbesondere auch für die Verwendung bei der Blutfiltration.

Die Membrane besteht vorzugsweise aus einem thermoplastischen Elastomer. Dieser Material besitzt den Vorteil einer sehr großen Flexiblilität, so daß die vollständige Anlegung der Membrane an die Kontur des Unfiltratraumes ermöglicht wird.

Das Verfahren zum Filtrieren von Flüssigkeiten unter Verwendung der Vorrichtung sieht vor, daß das eigentliche Filtrieren mittels Flüssigkeitsdruckgefälle zwischen Einlauf und Auslauf durchgeführt wird und daß zum Auspressen der Restmengen an Unfiltrat bzw. zum Trocknen und Verfestigen des Filterkuchens die Membranplatte mit einem Druckmedium beaufschlagt und die Membranen gegen die Filterkuchen, Filtermedien und Filterplatten gepreßt werden.

Das Verfahren zum Reinigen der Vorrichtung sieht vor, daß die Filterplatten, Membranplatten und gegebenenfalls Rahmen ohne Abschnitte aus Schichtfiltermaterial zusammenmontiert werden, daß danach die Membrane bis oder nahezu bis zur Anlage an den Filterplatten ausgedehnt werden und daß schließlich die in den Filterplatten vorhandenen Ablaufkanäle für das Filtrat mit einer schnell fließenden Reinigungsflüssigkeit beaufschlagt werden.

Es besteht die Möglichkeit, die Membrane nur soweit aufzublasen, daß zwischen der Membrane und der Filterplatte nur ein geringer Zwischenraum mit entsprechend kleinem Querschnitt entsteht, so daß hohe Strömungsgeschwindigkeiten der Reinigungsflüssigkeit erzielt werden können. Die für eine optimale Reinigung erforderliche Strömungsgeschwindigkeit von 2 m/sec kann problemlos erreicht werden.

Ein Ausführungsbeispiel der Erfindung wird nachfolgend anhand der Zeichnungen näher erläutert. Es zeigen:
- Figur 1: eine perspektivische Darstellung der Filtervorrichtung,
- Figur 2a,b: eine Seitenansicht, teilweise im Schnitt, der Filteranordnung, mit nicht aufgeblasenen und aufgeblasenen Membranen,
- Figuren 3a-c: Draufsichten und Teilschnittdarstellungen der Membranplatte,
- Figuren 4a-c: Draufsichten und Teilschnittdarstellungen eines Rahmens,
- Figuren 5a-d: Draufsichten und Teilschnittdarstellungen einer Filterplatte.

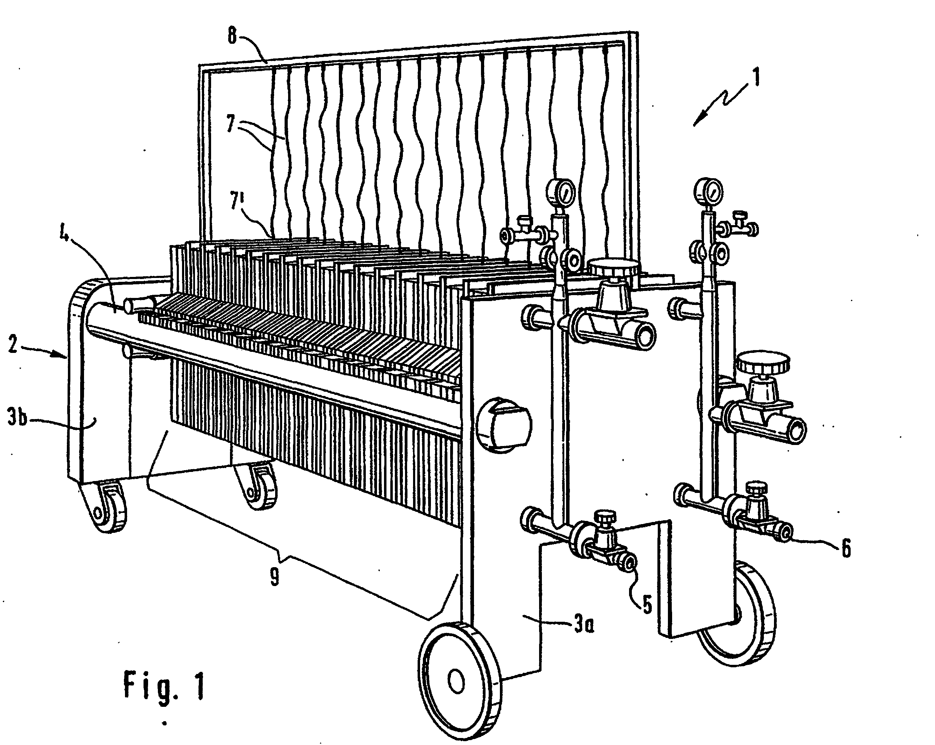

In der Figur 1 ist eine Filtervorrichtung 1 perspektivisch dargestellt. Die Filtervorrichtung besitzt ein fahrbares Gestell 2, das an den beiden Enden jeweils eine Gestellplatte 3a, b aufweist, die über zwei Auflagebalken 4 miteinander verbunden sind. Auf diesen Auflagebalken 4 werden zur Bildung einer Plattenanordnung 9 die Filterplatten 40, Rahmen 20 und Membranplatten 30 aufgehängt und über eine Preßvorrichtung gegeneinander dichtend verpreßt. Die Membranplatten 30 besitzen Druckluftanschlüsse 7', an denen Schläuche 7 befestigt sind, die über eine Stange 8 zu einer gemeinsamen Druckluftversorgung (nicht dargestellt) geführt werden.

Im vorderen Teil des Gestells sind Anschlüsse 5 und 6 für den Filtratzulauf und den Filtratablauf vorgesehen, die an die im Inneren der Platten 30, 40 und Rahmen 20 liegenden Filtrat- und Unfiltratkanäle angeschlossen sind. Zur Bildung dieser Filtrat- und Unfiltratkanäle sind in den Platten 30, 40 und Rahmen 20 in den Eckpunkten entsprechend dimensionierte Augen vorgesehen.

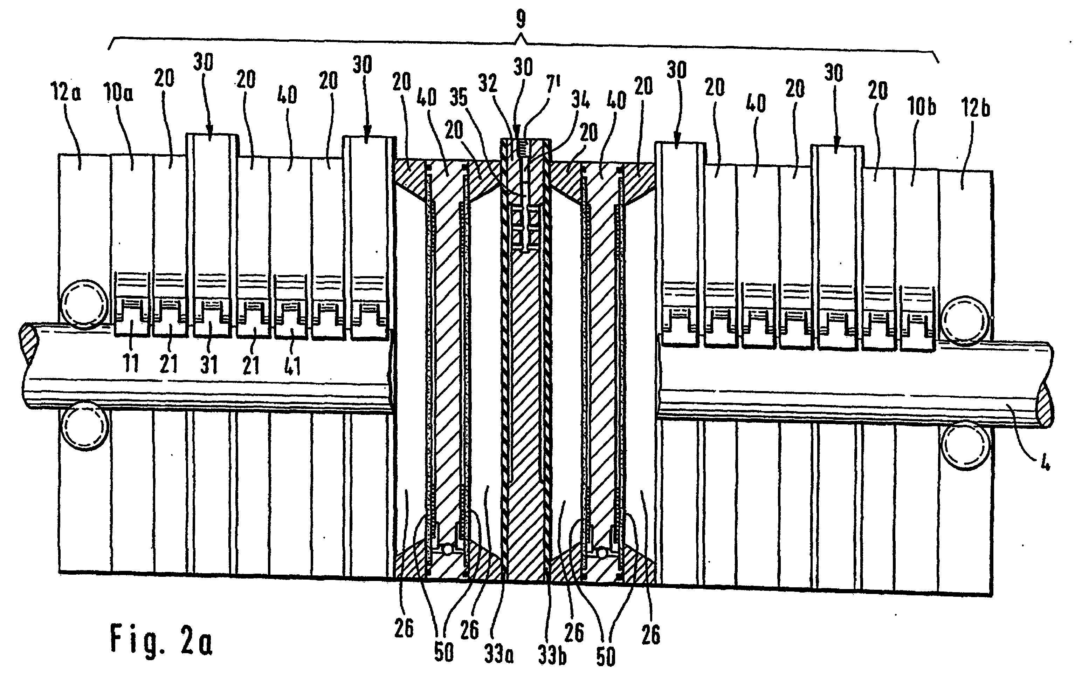

In der Figur 2a ist eine Filterplattenanordnung 9 im Detail dargestellt. An den beiden Enden der gesamten Anordnung sind lose Deckel 12a, 12b angeordnet, die über eine geeignete Druckvorrichtung Druck auf die zwischen den beiden Deckeln angeordneten Platten und Rahmen ausüben. An die beiden losen Deckel 12a und 12b schließen sich zunächst die Endplatten 10a und 10b an. Danach folgt jeweils ein Rahmen 20, eine Membranplatte 30 und wiederum ein Rahmen 20 sowie eine Filterplatte 40. Diese Anordnung setzt sich in beliebiger Vervielfältigung fort. Sämtliche Rahmen und Platten besitzen Haltenasen 11, 21, 31 und 41, mit denen sie verschiebbar auf dem Haltebalken 4 aufliegen.

Im mittleren Bereich ist eine Schnittdarstellung der einzelnen Platten zu sehen, die noch im Zusammenhang mit den folgenden Figuren eingehender beschrieben werden. Der Rahmen 20 besteht im wesentlichen aus einem rechteckigen oder quadratischen Rahmen, der sowohl an der benachbarten Membranplatte 30 bzw. Membran 33a, b als auch an der Filterplatte 40 bzw. Filterschicht 50 dichtend anliegt. Der Rahmen 20 begrenzt zusammen mit der benachbarten Filterschicht 50 und der Membran 33a, b den Unfiltratraum 26. Die Filterplatte 40 besteht aus einem Vollkunststoffbauteil, das an den Seitenflächen jeweils Horizontal- und Vertikalnuten aufweist. In entsprechenden Vertiefungen sind die Filterschichten 50 eingesetzt.

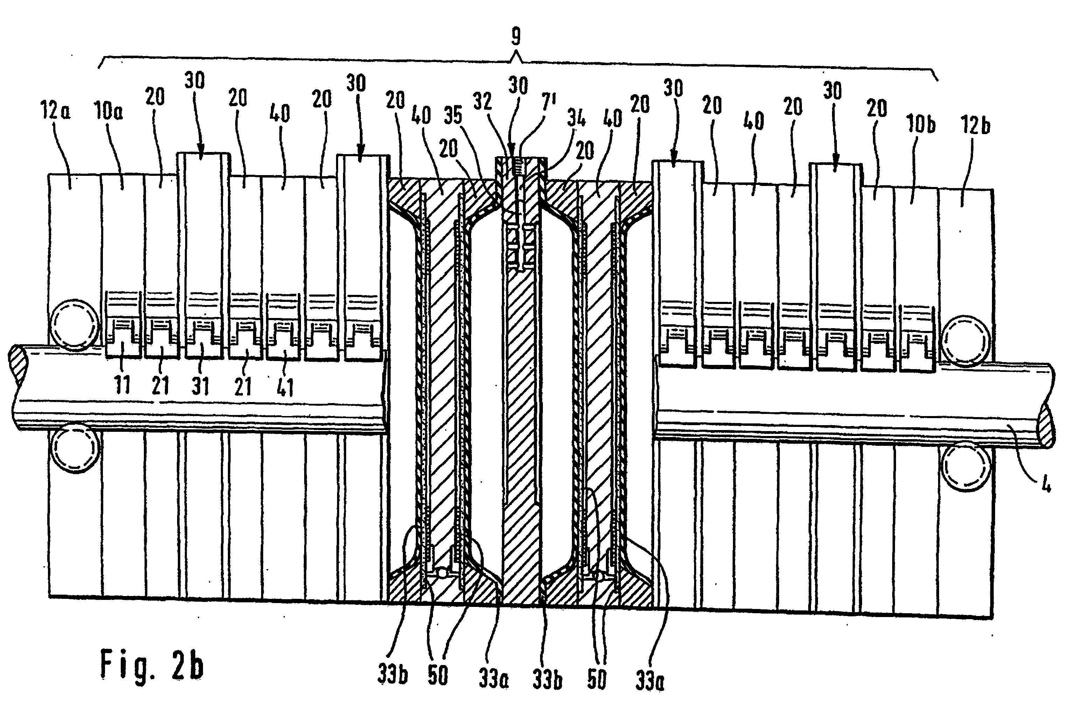

Die Membranplatte 30 steht jeweils gegenüber den übrigen Bauteilen nach oben vor und besitzt einen Stützkörper 32, auf dem beidseitig die Membranen 33a,b angeordnet sind. Über einen Druckluftkanal 34 können die Membranen 33a,b aufgeblasen werden, so daß diese sich in den Unfiltratraum 26 wölben und diesen vollständig auskleiden können, wie dies in der Figur 2b dargestellt ist. Der sich während der Filtration ausbildende Filterkuchen ist nicht dargestellt, so daß die Membrane 33a, b unmittelbar an der Filterschicht 50 anliegt.

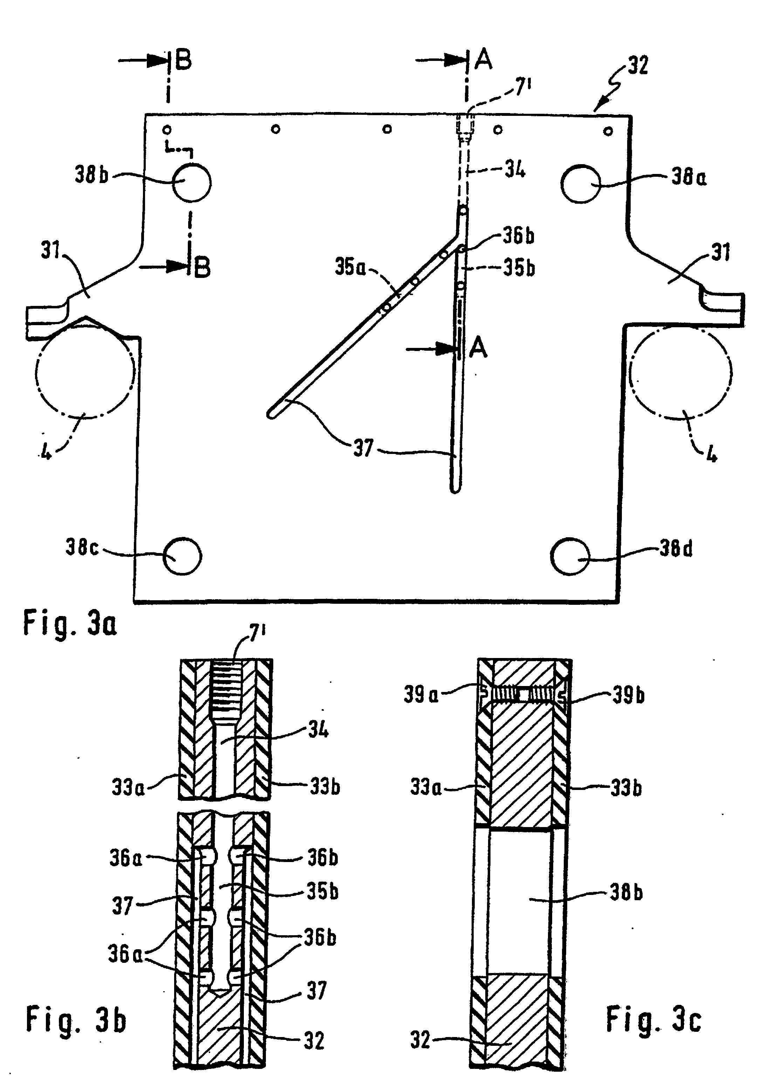

In der Figur 3a ist eine solche Membranplatte 30 im Detail dargestellt. Der Stützkörper 32 der Membranplatte 30 hat eine rechteckige oder quadratische Kontur und besitzt an den Seiten Nasen 31, mit denen die Membranplatte auf den Auflagebalken 4 aufliegt. Der an der oberen Stirnseite außermittig angeordnete Druckluftanschluß 7' setzt sich in einem im Inneren angeordneten Druckluftkanal 34 fort, der zwei Kanaläste 35a und b aufweist, die in der hier gezeigten Ausführungsform Y-förmig angeordnet sind.

Wie aus der Figur 3b zu entnehmen ist, erstreckt sich der jeweilige Druckluftkanal 34 bzw. die entsprechenden Kanaläste 35a und b mittig durch den Stützkörper 32 der Membranplatte 30 und ist mit Auslaßöffnungen 36a, b versehen, die an den beiden Oberflächen des Stützkörpers 32 enden und die Verbindung zu den beiden an der Oberfläche des Stützkörpers 32 ausgebildeten Nuten 37 herstellen. Durch die Nuten 37 wird die Luft besser unterhalb der Membrane 33a,b verteilt und somit ein problemloses Aufblasen der Membranen 33a und b ermöglicht.

In der Figur 3c ist die Verschraubung der Membrane 33a, b mittels der beiden Schrauben 39a, b dargestellt. Die Augen 38a - d dienen im Zusammenwirken mit den Augen der übrigen Bauteile als Filtrat- bzw. Unfiltratkanäle.

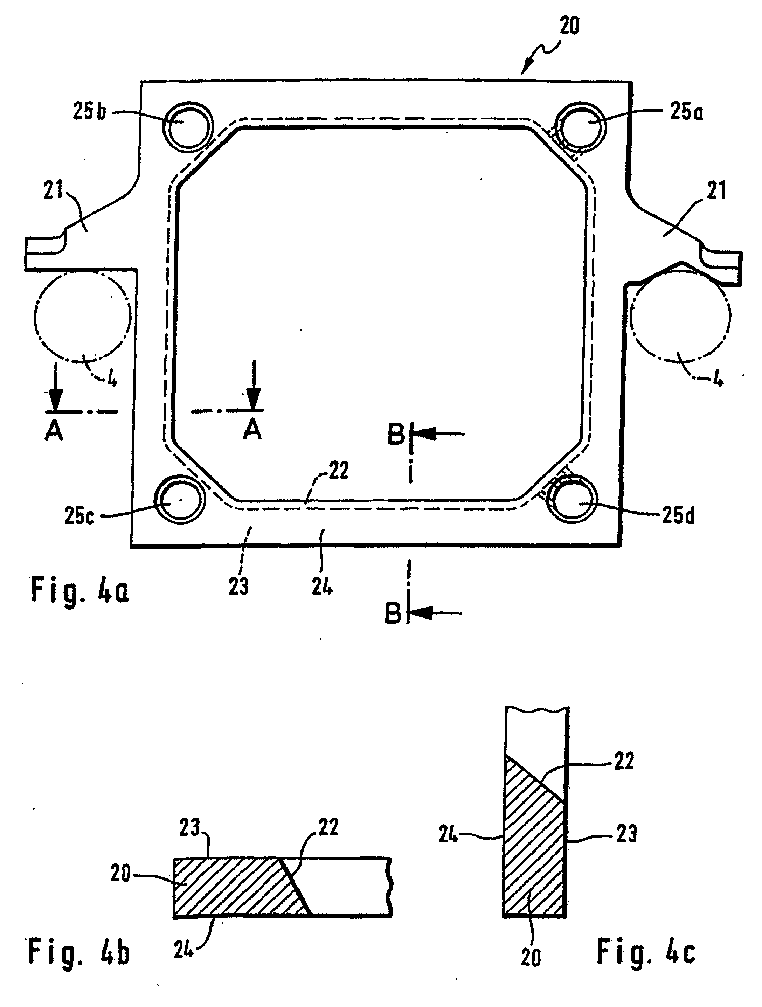

In der Figur 4a ist ein Rahmen 20 dargestellt, der ebenfalls vier an denselben Positionen befindliche Augen 25a - d aufweist. Auch der Rahmen 20 besitzt Haltenasen 21 zur Auflage auf den Auflagebalken 4. Wie die in den Figuren 4b und 4c dargestellten Schnitte A-A bzw. B-B zeigen, sind die Innenflächen 22 abgeschrägt. Die Abschrägung erfolgt von der Filterschichtseite 24 in Richtung Membranplatte 30 (Membranseite 23), so daß die Membrane 33a, b sich beim Ausdehnen leichter an die Kontur des Rahmens 20 und somit an die Kontur des Unfiltratraumes 26 anlegen kann.

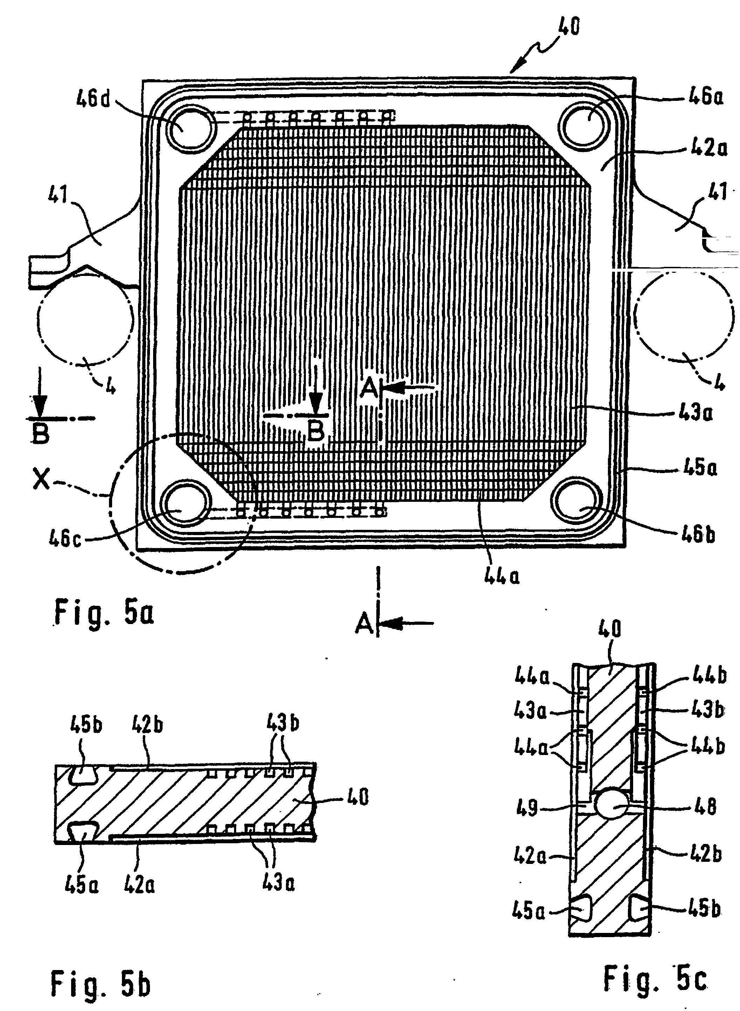

In der Figur 5a ist die Draufsicht auf eine Filterplatte 40 ohne Filterschicht 50 dargestellt. Auch diese Platte besitzt entsprechende Augen 46a - d und Haltenasen 41. Am Rand ist jeweils eine umlaufende Vertiefung 45a,b zur Aufnahme einer Rundschnur für die Abdichtung vorgesehen.

In dem Bereich, in dem die Filterschicht 50 aufgelegt wird, besitzt die Filterplatte 40 auf beiden Seiten eine entsprechende Vertiefung 42a bzw. 42b, die auch den Bereich der Augen 44a - d umfaßt, weil die Filterschicht an den entsprechenden Stellen ebenfalls Augen aufweist. Die Tiefe der Vertiefung 42a, b entspricht in etwa der Dicke der einzusetzenden Filterschicht 50. In diesem Bereich sind sowohl horizontale Nuten 44a, b als auch vertikale Nuten 43a, b angeordnet, die das Ablaufen des Filtrates unterhalb der Filterschicht 50 ermöglichen (s. auch Figur Sa - d). Die horizontalen Nuten 44a, b sind jeweils in einem oberen und einem unteren streifenförmigen Bereich angeordnet und dienen zur Querverteilung des Filtrats. Gesammelt wird das Filtrat in einem querverlaufenden Filtratkanal 48, der über Verbindungsdurchbrechungen 49 mit den Nuten im unteren Bereich der Filterplatte 40 verbunden ist. Dieser Sammelkanal 48 steht mit dem Auge 46c in Verbindung. Für die Luftzufuhr steht das obere Auge 46d mit einer entsprechenden Kanalanordnung in Verbindung.

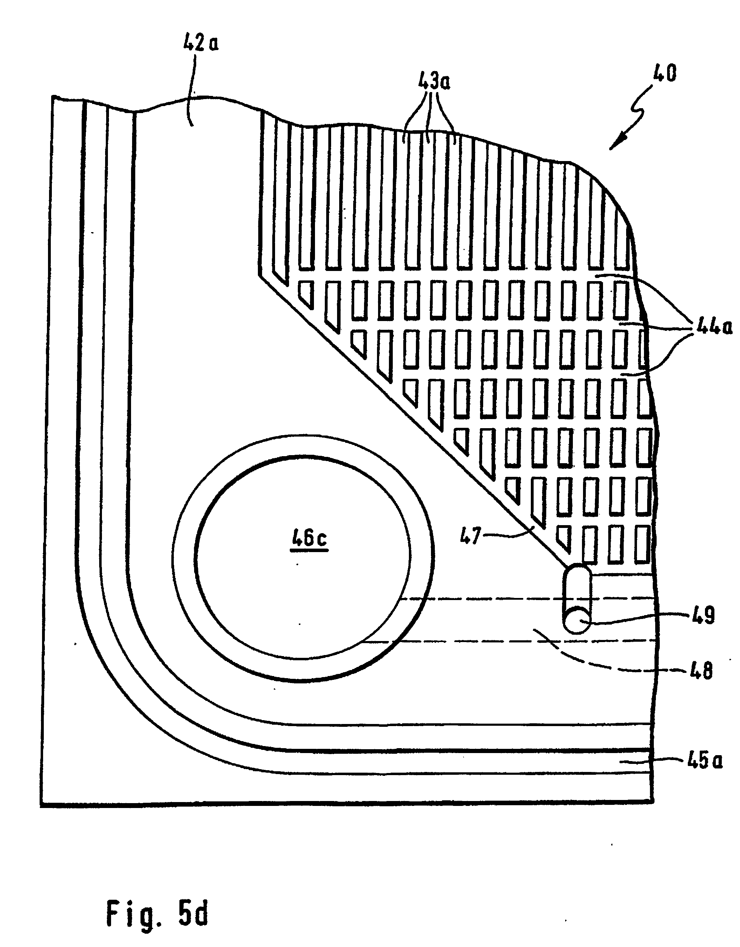

Eine vergrößerte Darstellung der Vertikal- und Horizontalnuten ist aus der Figur 5d zu entnehmen, in der die Einzelheit X vergrößert dargestellt ist. Im Bereich des Auges 46c geht die äußere Vertikalnut 43a in eine Schrägnut 47 über.

### Bezugszeichen

- 1: Filtervorrichtung
- 2: Gestell
- 3a,b: Gestellplatte
- 4: Auflagebalken
- 5: Filtratzulauf
- 6: Filtratablauf
- 7: Druckluftschlauch
- 7': Drockluftanschluß
- 8: Stange
- 9: Plattenanordnung
- 10a,b: Endplatte
- 11: Haltenase
- 12a, b: Deckel
- 20: Rahmen
- 21: Haltenase
- 22: Innenfläche
- 23: Membranseite
- 24: Filterschichtseite
- 25a-d: Auge
- 26: Unfiltratraum
- 30: Membranplatte
- 31: Haltenase
- 32: Stützkörper
- 33a,b: Membran
- 34: Druckluftkanal
- 35a,b: Kanalast
- 36a,b: Auslaßöffnung
- 37: Nut
- 38a,b,c,d: Auge
- 39a,b: Schraube
- 40: Filterplatte
- 41: Haltenase
- 42a,b: Vertiefung
- 43a,b: Vertikalnut
- 44a,b: Horizontalnut
- 45a,b: Vertiefung für Rundschnur
- 46a-d: Auge
- 47: Schrägnut
- 48: Sammelkanal
- 49: Verbindungsdurchbrechung
- 50: Filterschicht, Abschnitt aus Schichtenfiltermaterial

## Patentansprüche

1. Vorrichtung zum kontinuierlichen Filtrieren von Flüssigkeiten mittels Druckgefälle zwischen Einlauf und Auslauf sowie zum Auspressen restlicher Unfiltratmengen mittels eines pneumatischen Druckmediums vor dem Öffnen der Vorrichtung mit
- einer Mehrzahl von Filterplatten (40), die beidseitig eine Vertiefung (42a,b) zur Aufnahme eines flächigen Filtermediums (50) aufweisen und mit Ablaufkanälen (43a,b;44a,b) für das Filtrat ausgestattet sind,
- einer Mehrzahl von Membranplatten (30), die Anschlüsse (7'), Bohrungen (34,36a,b) und Ausnehmungen (37) für die Zufuhr des Druckmediums aufweisen und beidseitig mit einer elastischen Membran (33a,b) belegt sind, wobei zwischen Filtermedium und Membran ein Unfiltrat- bzw. Filterkuchenraum (26) gebildet ist, wobei die unter Druckbeaufschlagung bis zur flächigen Anlage an den Filterplatten (40) bzw. Schichtfiltermaterial elastisch dehnbaren Membranen (33a,b) beidseitig eine glatte Oberfäche aufweisen und in entspanntem Zustand vollflächig an der Membranplatte (30) anliegen,
- zwischen den Membranplatten (30) und den Filterplatten (40) den Unfiltratraum (26) begrenzenden Rahmen (20),
- korrespondierenden Ausnehmungen (Augen 38a,b,c,d) (46a,b,c,d) in den Filter- und Membranplatten (40,30), die in montiertem Zustand wenigstens je einen Zulaufkanal für das Unfiltrat und einen Ablaufkanal für das Filtrat bilden,
sowie mit
- Endplatten (10a,b), Halterungs- und Spanneinrichtungen (3a,b,4), um die Filterplatten (40) und Membranplanen (30) zu einem Paket lösbar miteinander zu verbinden,
**dadurch gekennzeichnet,**
**daß** das Filtermedium aus in die Vertiefungen (42a,b) eingelegten Abschnitten (50) eines Schichtfiltermaterials besteht, und daß die Abschnitte (50) aus Schichtfiltermaterial randseitig zwischen den Filterplatten (40) und den Rahmen (20) abdichtend zusammendrückbar sind.

2. Vorrichtung nach Anspruch 1, **dadurch gekennzeichnet, daß** die Ablaufkanäle aus vertikal verlaufenden Nuten (43a,b) und horizontal verlaufenden Nuten (44a,b) bestehen, und im Bereich der Vertiefungen (42a,b) für das Schichtenfiltermaterial (50) in den Filterplatten (40) ausgebildet sind.

3. Vorrichtung nach Anspruch 2, **dadurch gekennzeichnet, daß** die Nuten (43a,b,44a,b) mit mindestens einem im Innern der Filterplatte (40) angeordneten Filtratsammelkanal (48) in Verbindung stehen.

4. Vorrichtung nach einem der Ansprüche 1 bis 3, **dadurch gekennzeichnet, daß** die Rahmen (20) rechteckig, vorzugsweise quadratisch sind und horizontal sowie vertikal einen im Querschnitt trapezförmigen Unfiltrat- bzw. Filterkuchenraum (26) umschließen, bei dem die von der Membranplatte (30) gebildete Grenzfläche größer ist als die gegenüberliegende, von der Filterplatte (40) gebildete Grenzfläche.

5. Vorrichtung nach einem der Ansprüche 1 bis 4, **dadurch gekennzeichnet, daß** die Membranplatte (30) einen Stützkörper (32) aufweist, auf dem die Membranen (33a,b) angeordnet sind, und
daß im Stützkörper (32) ein Druckluftkanal (34,35a,b) angeordnet ist, der über Auslaßöffnungen (36a,b) mit den beiden den Membranen (33a,b) benachbarten Oberflächen des Stützkörpers (32) in Verbindung steht.

6. Vorrichtung nach einem der Ansprüche 1 bis 5, **dadurch gekennzeichnet, daß** die Ausnehmungen (46a,b,c,d) für die Zu- und Ablaufkanäle in den Filterplatten (40) im Bereich der Vertiefungen (42a,b) für die Abschnitte aus Schichtfiltermaterial (50) liegen.

7. Vorrichtung nach einem der Ansprüche 1 bis 6, **dadurch gekennzeichnet, daß** die Abschnitte (50) aus Schichtfiltermaterial sowohl zur Abdichtung zwischen den Unfiltrat und Filtrat führenden Räumen als auch zur Abdichtung der Vorrichtung nach außen benutzt werden.

8. Vorrichtung nach einem der Ansprüche 1 bis 7, **dadurch gekennzeichnet, daß** die Membranen (33a,b) sich über die gesamte Fäche der Membranplatten (30) erstrecken und in montiertem Zustand zwischen den Membranplatten (30) und den Rahmen (20) randseitig abdichtend eingeklemmt sind.

9. Vorrichtung nach einem der Ansprüche 1 bis 8, **dadurch gekennzeichnet, daß** die Membranplatten (30) mindestens im Bereich der Anschlüsse (7') für das pneumatische Druckmedium über die einheitliche Kontur der Filterplatten (40) vorstehen.

10. Vorrichtung nach Anspruch 9, **dadurch gekennzeichnet, daß** die Anschlüsse (7') an der Stirnseite der Membranplatten (30), vorzugsweise außerhalb der vertikalen Mittellängsebene der Vorrichtung angeordnet sind.

11. Vorrichtung nach einem der Ansprüche 1 bis 10, **dadurch gekennzeichnet, daß** die Filterplatten (40) beidseitig eine außen umlaufende, vom Rand beabstandete Nut (45a,b) für die Aufnahme einer Dichtung aufweisen.

12. Vorrichtung nach einem der Ansprüche 1 bis 11, **dadurch gekennzeichnet, daß** die Filterplatten (40), die Membranplatten (30) und/oder die Rahmen (20) aus Kunststoff bestehen.

13. Vorrichtung nach einem der Ansprüche 1 bis 12, **dadurch gekennzeichnet, daß** die Membranen (33a,b) aus einem thermoplastischen Elastomer bestehen.

14. Verwendung der Vorrichtung nach einem der Ansprüche 1 bis 13 zur Filtration von Blut.

15. Verfahren zum Filtrieren von Flüssigkeiten unter Verwendung einer Vorrichtung nach einem der Ansprüche 1 bis 13, **dadurch gekennzeichnet, daß** das eigentliche Filtrieren mittels Flüssigkeits-Druckgefälle zwischen Einlauf und Auslauf durchgeführt wird und daß zum Auspressen der Restmengen an Unfiltrat bzw. zum Trocknen und Verfestigen des Filterkuchens die Membranplatte mit einem Druckmedium beaufschlagt und die Membranen gegen die Filterkuchen, Filtermedien und Filterplatte angepreßt werden.

16. Verfahren zum Reinigen einer Vorrichtung nach den Ansprüchen 1 bis 13, **dadurch gekennzeichnet, daß** die Filterplatten, Membranplatten und Rahmen ohne Abschnitte aus Schichtfiltermaterial zusammenmontiert werden, daß danach die Membranen bis oder nahezu zur Anlage an den Filterplatten ausgedehnt werden und daß schließlich die in den Filterplatten vorhandenen Ablaufkanäle für das Filtrat mit einer schnellfließenden Reinigungsflüssigkeit beaufschlagt werden.

## Claims

1. Device for the continuous filtration of fluids by means of a pressure differential between the inlet and the outlet, and for the pressing-out of residual amounts of unfiltered matter by means of a pneumatic pressure medium before the device is opened, comprising
- a plurality of filter plates (40) which have a depression (42a, b) on both sides for receiving a planar filter medium (50) and are equipped with drainage channels (43a, b; 44a, b) for the filtrate,
- a plurality of membrane plates (30) which have connections (7'), bores (34, 36a, b) and recesses (37) for the admission of the pressure medium and which are covered on both sides by an elastic membrane (33a, b), wherein an unfiltered matter or filter cake chamber (26) is formed between the filter medium and the membrane, wherein the membranes (33a, b), which, upon application of pressure, are elastically expansible until they lie in face-to-face contact with the filter plates (40) or the sheet filter material, have a smooth surface on both sides and rest, in the relieved state, in full face-to-face contact with the membrane plate (30),
- between the membrane plates (30) and the filter plates (40), frames (20) defining the unfiltered matter chamber (26),
- corresponding openings (eyes 38a, b, c, d) (46a, b, c, d) in the filter and membrane plates (40, 30), which openings form, in the assembled state, at least one admission channel for the unfiltered matter and one drainage channel for the filtrate,
and also comprising
- end plates (10a, b), holding and clamping devices (3a, b, 4) for separably connecting the filter plates (40) and membrane plates (30) to one another to form a pack,
**characterised in**
**that** the filter medium consists of sections (50) of a sheet filter material laid in the depressions (42a, b), and the sections (50) of sheet filter material can be pressed together at their edges between the filter plates (40) and the frames (20) to form a seal.

2. Device according to claim 1, **characterised in that** the drainage channels consist of vertical grooves (43a, b) and horizontal grooves (44a, b), and are formed in the filter plates (40) in the region of the depressions (42a, b) for the sheet filter material (50).

3. Device according to claim 2, **characterised in that** the grooves (43a, b, 44a, b) are connected to at least one filtrate collection channel (48) arranged in the interior of the filter plate (40).

4. Device according to any one of claims 1 to 3, **characterised in that** the frames (20) are rectangular, preferably square, and enclose both horizontally and vertically an unfiltered matter or filter cake chamber (26) having a trapezoidal cross-section, in which chamber (26) the boundary surface formed by the membrane plate (30) is larger than the opposing boundary surface formed by the filter plate (40).

5. Device according to any one of claims 1 to 4, **characterised in that** the membrane plate (30) has a support body (32) on which the membranes (33a, b) are arranged and that a compressed air duct (34, 35a, b) is arranged in the support body (32), which duct (34, 35a, b) is connected *via* outlet openings (36a, b) to the two surfaces of the support body (32) that are adjacent to the membranes (33a, b).

6. Device according to any one of claims 1 to 5, **characterised in that** the openings (46a, b, c, d) for the inlet and drainage channels in the filter plates (40) are in the region of the depressions (42a, b) for the sections of sheet filter material (50).

7. Device according to any one of claims 1 to 6, **characterised in that** the sections (50) of sheet filter material are used both to provide a seal between the chambers containing the unfiltered matter and the filtrate and to seal the device to the outside.

8. Device according to any one of claims 1 to 7, **characterised in that** the membranes (33a, b) extend over the entire surface area of the membrane plates (30) and, in the assembled state, are clamped at their edges between the membrane plates (30) and the frames (20) to form a seal.

9. Device according to any one of claims 1 to 8, **characterised in that** the membrane plates (30) protrude beyond the uniform contour of the filter plates (40) at least in the region of the connections (7') for the pneumatic pressure medium.

10. Device according to claim 9, **characterised in that** the connections (7') are arranged at the end of the membrane plates (30), preferably outside the vertical longitudinal mid-plane of the device.

11. Device according to any one of claims 1 to 10, **characterised in that** the filter plates (40) have on both sides a groove (45a, b) for receiving a seal, extending around the outside at a distance from the edge.

12. Device according to any one of claims 1 to 11, **characterised in that** the filter plates (40), the membrane plates (30) and/or the frames (20) consist of plastics material.

13. Device according to any one of claims 1 to 12, **characterised in that** the membranes (33a, b) consist of a thermoplastic elastomer.

14. Use of a device as claimed in any one of claims 1 to 13 for the filtration of blood.

15. Method for the filtration of fluids using a device as claimed in any one of claims 1 to 13, **characterised in that** the actual filtration is carried out by means of a pressure differential of the fluid between the inlet and the outlet, and that the membrane plate is acted upon by a pressure medium and the membranes are pressed against the filter cakes, filter media and filter plate to press out residual amounts of unfiltered matter and to dry and solidify the filter cake.

16. Method for cleaning a device as claimed in any one of claims 1 to 13, **characterised in that** the filter plates, membrane plates and frames are assembled without sections of sheet filter material, then the membranes are expanded until they contact or nearly contact the filter plates, and finally a fast-flowing cleaning fluid is sent through the drainage channels for the filtrate in the filter plates.

## Revendications

1. Dispositif pour filtrer en permanence des liquides au moyen d'une chute de pression entre l'entrée et la sortie ainsi que pour comprimer des quantités restantes de liquide non filtré au moyen d'un milieu de pression pneumatique avant l'ouverture du dispositif avec
- plusieurs plaques de filtration (40) qui présentent un évidement (42a, b) de chaque côté pour recevoir un milieu de filtration plan (50) et qui possèdent des canaux d'évacuation (43a, b ; 44a, b) pour le filtrat,
- plusieurs plaques à diaphragme (30) qui présentent des raccords (7'), des trous de perçage (34, 36a, b) et des creux (37) pour introduire le milieu de pression et possèdent de chaque côté une membrane élastique (33a, b), moyennant quoi un espace de gâteau de filtre ou de liquide non filtré (26) est formé entre le milieu de filtration et la membrane, moyennant quoi les membranes (33a, b) extensibles élastiquement sous la pression jusqu'à une disposition plane au niveau des plaques de filtration (40) ou du matériau de filtration de couche présentent une surface lisse et adhèrent, dans un état détendu, à toute la surface de la plaque à diaphragme (30),
- entre les plaques à diaphragme (30) et les plaques de filtration (40), le cadre de limitation (20) de l'espace de liquide non filtré (26),
- les creux correspondants (oeillets 38a, b, c, d) (46a, b, c, d) dans les plaques de filtration et à diaphragme (40, 30), qui forment, dans un état monté, au moins un canal d'alimentation pour le liquide non filtré et un canal d'évacuation pour le filtrat,
ainsi que
- des plaques d'extrémité (10a, b), des dispositifs de fixation et de serrage (3a, b, 4) pour fixer les plaques de filtration (40) et les plaques à diaphragme (30) entre elles en un paquet amovible,
**caractérisé en ce que**
le milieu de filtration se compose de sections (50) d'un matériau de filtration de couche insérées dans les évidements (42a, b), et **en ce que** les sections (50) en matériau de filtration de couche sont compressibles de façon étanche entre les plaques de filtration (40) et les cadres (20).

2. Dispositif selon la revendication 1, **caractérisé en ce que** les canaux d'évacuation sont constitués de rainures verticales (43a, b) et de rainures horizontales (44a, b) et sont formés dans la région des évidements (42a, b) pour le matériau de filtration de couche (50) dans les plaques de filtration (40).

3. Dispositif selon la revendication 2, **caractérisé en ce que** les rainures (43a, b, 44a, b) sont raccordées au moins à un collecteur de filtrat (48) disposé à l'intérieur de la plaque de filtration (40).

4. Dispositif selon l'une quelconque des revendications 1 à 3, **caractérisé en ce que** les cadres (20) sont rectangulaires, de préférence quadratiques, et comportent horizontalement et verticalement un espace de gâteau de filtre (26) ou de liquide non filtré en forme de trapèze, en section transversale, pour lequel la surface de séparation formée par la plaque à diaphragme (30) est plus grande que la surface de séparation opposée formée par la plaque de filtration (40).

5. Dispositif selon l'une quelconque des revendications 1 à 4, **caractérisé en ce que** la plaque à diaphragme (30) présente un corps de soutien (32) sur lequel les membranes (33a, b) sont disposées, et **en ce que** dans le corps de soutien (32), un canal d'air comprimé (34, 35a, b) est disposé, canal qui est raccordé via des ouvertures de sortie (36a, b) aux deux surfaces adjacentes aux membranes (33a, b) du corps de soutien (32).

6. Dispositif selon l'une quelconque des revendications 1 à 5, **caractérisé en ce que** les creux (46a, b, c, d) des canaux d'introduction et d'évacuation sont situés dans les plaques de filtration (40) dans la région des évidements (42a, b) pour les sections en matériau de filtration de couche (50).

7. Dispositif selon l'une quelconque des revendications 1 à 6, **caractérisé en ce que** les sections (50) en matériau de filtration de couche sont utilisées aussi bien pour permettre l'étanchéité entre les espaces conducteurs du liquide non filtré et du filtrat que pour permettre également l'étanchéité du dispositif vers l'extérieur.

8. Dispositif selon l'une quelconque des revendications 1 à 7, **caractérisé en ce que** les membranes (33a, b) s'étendent sur toute la surface des plaques à diaphragme (30) et, dans un état monté, sont coincées de façon étanche sur les bords entre les plaques de filtration (30) et les cadres (20).

9. Dispositif selon l'une quelconque des revendications 1 à 8, **caractérisé en ce que** les plaques à diaphragme (30) dépassent, au moins dans la région des raccords (7') pour le milieu de pression pneumatique, du contour uniforme des plaques de filtration (40).

10. Dispositif selon la revendication 9, **caractérisé en ce que** les raccords (7') sont disposés sur la face avant des plaques à diaphragme (30), de préférence à l'extérieur du niveau de la longueur médiane verticale du dispositif.

11. Dispositif selon l'une quelconque des revendications 1 à 10, **caractérisé en ce que** les plaques de filtration (40) présentent des deux côtés une rainure extérieure circulaire espacée du bord (45a, b) pour recevoir une garniture d'étanchéité.

12. Dispositif selon l'une quelconque des revendications 1 à 11, **caractérisé en ce que** les plaques de filtration (40), les plaques à diaphragme (30) et/ou les cadres (20) sont en plastique.

13. Dispositif selon l'une quelconque des revendications 1 à 12, **caractérisé en ce que** les membranes (33a, b) sont constituées par un élastomère thermoplastique.

14. Utilisation du dispositif selon l'une quelconque des revendications 1 à 13 pour filtrer du sang.

15. Procédé pour filtrer des liquides sous l'utilisation d'un dispositif selon l'une quelconque des revendications 1 à 13, **caractérisé en ce que** la filtration propre est effectuée au moyen d'une chute de pression des liquides entre l'entrée et la sortie, et **en ce que** pour comprimer la quantité restante au niveau du liquide non filtré ou pour assécher et compacter le gâteau de filtre, la plaque à diaphragme est alimentée par un milieu de pression et les membranes sont compressées contre le gâteau de filtre, les milieux de filtration et la plaque de filtration.

16. Procédé pour nettoyer un dispositif selon l'une quelconque des revendications 1 à 13, **caractérisé en ce que** les plaques de filtration, les plaques à diaphragme et les cadres sans les sections en matériau de filtration en couches sont assemblés, **en ce que** les membranes sont ensuite étendues jusqu'à s'appliquer contre les plaques de filtration ou près de celles-ci et **en ce que**, enfin, les canaux d'évacuation existants dans les plaques de filtration pour le filtrat sont alimentés par un liquide nettoyant à écoulement rapide.
